# EUROPÄISCHE PATENTANMELDUNG

(11) **EP 1 286 571 A2**
(43) Veröffentlichungstag der Anmeldung: **26.02.2003**
(21) Anmeldenummer: 02009872.9
(22) Anmeldetag: 02.05.2002
(51) Int. Cl.: H05B 37/03, F21V 23/00

(54) **Elektronisch abgesicherte Stromversorgung für Schaltungsgruppen und Anzeigevorrichtung für eine sich änderende Information**

(30) Priorität: 02.05.2001 DE 10121380; 02.05.2001 DE 20107482 U
(71) Anmelder: Garufo GmbH, 85368 Wang (DE)
(72) Erfinder: Garufo, Gabriel, 85368 Wang (DE)
(74) Vertreter: Pausch, Thomas, Dipl.-Phys.

(57) **Zusammenfassung**

Die Erfindung betrifft eine Elektronisch abgesicherte Schaltungsgruppen-Stromversorgung der Schaltungsgruppen (21 bis 25) und Reihen-Komparatoren (31 bis 35) zugeordnet sind, die bei über- oder unterschreiten des Stromes I_{R} durch die Schaltungsgruppe bezüglich eines voreingestellten Wertes jeweils einen von einem Normalwert verschiedenen Ergebniswert E_{R} liefern, mit einem Gesamt-Komparator (4) der bei über- oder unterschreiten des zusammengesetzten Gesamtstroms N*I_{R} bezüglich eines voreingestellten Wertes einen von einem Normalwert verschiedenen Ergebniswert E_{G} liefert, mit einer Ergebnisüberwachungseinrichtung (5), die die Ergebnisse E_{R} und E_{G} überwacht, wobei bei vorliegen eines vom Normalwert verschiedenen Ergebniswerts E_{G}, E_{R} die die Schaltungsgruppen mit Strom versorgende Stromoder Spannungsquelle (6) ab- oder eingeschaltet wird. Die Erfindung betrifft ferner eine Anzeigevorrichtung (1) für eine sich ändernde Information, wobei die Information durch Auswahl oder Kombination von einzelnen, auf einem Träger (T) angeordneten Leuchtelementen (L) dargestellt wird, wobei die Leuchtelemente durch Halbleiterbauelemente ausgebildet sind, insbesondere aus Leuchtdioden (2a), und die Halbleiterbauelemente in mehreren Schaltungsgruppen geschaltet sind, und jede Schaltungsgruppe strommäßig einen Nebenzweig (Ni) eines Hauptzweiges bildet.

## Beschreibung

Die Erfindung betrifft eine Elektronisch abgesicherte Schaltungsgruppen-Stromversorgung nach dem Anspruch 1 und eine Anzeigevorrichtung für eine sich ändernde Information nach dem Oberbegriff des Anspruchs 12, insbesondere zur Verwendung in einer Anlage zur Verkehrs-Regelung, -Steuerung, oder -Überwachung für Fahrzeuge, beispielsweise in einer Verkehrsampel.

Bei Anzeigevorrichtungen die in sicherheitsrelevanten und -kritischen Anwendungen zum Einsatz kommen, ist deren gesicherter Betrieb und definierter Ausfall von großer Bedeutung. Eine solche sicherheitskritische Anwendung ist beispielsweise bei Leuchtmitteln in Signalanlagen im Verkehr - hier seien Ampeln im Straßenverkehr und Signale im Schienenverkehr genannt - oder auch bei Anlagenüberwachungseinrichtungen (Kontrollleuchten) gegeben. Hierbei kommen immer mehr anstelle von Glüh- oder Gasentladungslampen parallel oder in Serie geschaltete Leuchtdioden (LEDs) zum Einsatz. Die noch gegenüber Glühlampen geringere Leuchtkraft wird durch den Betrieb mehrerer LEDs ausgeglichen. Die LEDs haben hierbei neben einer geringeren Verlustleistung auch den Vorteil, dass sie eine wesentlich höhere Ausfallsicherheit und Lebensdauer aufweisen.

Eine derart ausgebildete Anzeigevorrichtung, die für eine höchstmögliche Lebensdauer ausgelegt und geprüft ist, unterliegt jedoch wie alle andere Leuchtvorrichtungen Ausfällen, die zur Beeinträchtigung der Nutzung der Anzeigevorrichtung führen können. Gerade in den hier besonders relevanten Fällen, bei denen die Anzeigevorrichtung zur Abwendung von Schäden an Personen oder Fahrzeugen bzw. Gegenständen, also als Sicherheitssignal eingesetzt wird, muss eine der Anzeigevorrichtung zugeordnete Überwachungseinrichtung vorhanden sein, welche einen Defekt der Anzeigevorrichtung erkennen und entsprechende unverzügliche Maßnahmen aktivieren soll.

Eine Fehlfunktion der LEDs und damit der Anzeigevorrichtung muss von einem (für Glühlampen) standardisierten Steuergerät oder Funktions-Überwachungsgerät sicher erkannt werden können. Diese Steuergeräte sind so ausgelegt, dass sie ein Durchbrennen einer Glühlampe sicher erkennen können.

Die Überwachung von Glühlampenanordnungen ist schaltungstechnisch einfach und deshalb auch zumeist einfach gehalten: bei Glühlampen gibt es nur die beiden Betriebszustände intakt (Glühfaden in Ordnung) und defekt (Glühfaden durchgebrannt), jedoch keinerlei Zwischenzustände in der Charakteristik einer auf Glühlampen basierenden Anzeigevorrichtung. Daher sind deren Überwachungseinrichtungen (Steuergeräte) schaltungstechnisch äußerst einfach und beschränken sich im Wesentlichen auf das Feststellen eines binären Ja-Nein-Zustandes. Beispielsweise bei Verkehrsampeln mit Glühlampensignalen bislang weit verbreitet verwendete, konstruktiv und schaltungstechnisch äußerst einfach aufgebaute Überwachungseinrichtungen sind jedoch bei solchen Anzeigevorrichtungen, bei denen die Leuchtelemente durch Halbleiterbauelemente ausgebildet sind, bislang nicht verwendbar.

Eine Fehlfunktion einer LED unterscheidet sich von der einer Glühlampe u.a. dadurch, dass anstelle eines unterbrochenen Stromflusses durch die LED auch ein erhöhter Stromfluss auftreten kann. Bei stark gealterten LEDs nimmt zudem die Lichtausbeute mit steigender Betriebsstundenzahl ab. Somit kann bei einer aus vielen einzelnen LEDs aufgebauten Anzeigevorrichtung der Ausfall mehrerer LEDs unentdeckt bleiben. Das sichere Erkennen der Fehlfunktion durch die standardisierten Steuergeräte ist somit nicht mehr gewährleistet.

Bekanntlich hat ein aus Halbleiterbauelementen gegenüber solchen aus Glühlampen ausgebildeten Leuchtfeldern neben einer über die gesamte Fläche homogenere und damit auch aus weiter Entfernung deutlichere Erkennbarkeit vor allem den Vorteil, dass erst sehr viele defekte Leuchtdioden zu einem erkennbaren Informationsverlust führen. Durch eine geeignete Beschaltung der Leuchtdioden und Ausbildung der diese steuernden Schaltung kann selbst bei mehrerer Defekten der Leuchtdioden eine Abnahme der gesamten Lichtstärke verhindert werden. Durch die dezentrale Anordnung der gruppenweise geschalteten Leuchtdioden-Reihen kann weiterhin vermieden werden, dass Teilflächen des Leuchtfeldes dunkel werden. Es kann beispielsweise jede einzelne Leuchtdioden-Reihe einzeln auf Ausfall überwacht werden, und bei Überschreiten eines bestimmten Grenzwertes, beispielsweise bei mehr als 20% defekten Leuchtdioden die Anzeigevorrichtung über eine Abschaltautomatik vollständig abgeschalten werden.

Daher ist bei einer gattungsgemäßen Anzeigevorrichtung mit mehreren Leuchtelementen, wobei die Leuchtelemente durch Halbleiterbauelemente und insbesondere durch Leuchtdioden ausgebildet sind, zusätzlicher konstruktiver und schaltungstechnischer Aufwand für eine Überwachungseinrichtung notwendig.

Die Ausfallcharakteristik bislang bekannter Anzeigevorrichtungen mit Halbleiterbauelementen als Leuchtelementen ist wesentlich komplexer gegenüber einer einfachen Ausfallcharakteristik von Glühlampenanordnungen. Mit den bekannten, vor Ort vorhandenen und einfach gehaltenen Überwachungsmöglichkeiten kann ohne einen besonderen, erheblichen Schaltungsaufwand, nicht eindeutig auf den Leuchtzustand einer der Leuchtdioden geschlossen werden. Denn die für die Funktion von Leuchtdioden erforderliche Ansteuerung, die Leuchtschaltung an sich sowie etwaige andere Baugruppen oder Bausteine der Überwachungseinrichtung haben zwangsläufig auch eine Eigenstromaufnahme, die bei einem Defekt undefiniert ist und einen Stromfluss erzeugen kann, der als (ordnungsgemäßes) Leuchten interpretiert werden kann, obwohl bereits eine oder mehrere Leuchtdioden ausgefallen sind. Bei bestimmten Anwendungen, wie insbesondere bei Verkehrsampeln ist es zusätzlich notwendig, sicherzustellen, dass eine Mindeststrahlungsintensität und eine Mindestgleichmäßigkeit des Leuchtfeldes aufrechterhalten bleiben. Die Stromflussänderuhgen sind jedoch in der Regel relativ klein, sodass die Restleuchtintensität und die Gleichmäßigkeit des Leuchtfeldes unter Umständen nicht genau bestimmt und damit gegebenenfalls eine Sicherheitsabschaltung nicht zuverlässig durchgeführt werden kann.

Die bekannten auf Halbleiterbauelementen basierenden Anzeigevorrichtungen berücksichtigen in der Regel nur sogenannte hochohmige Ausfälle, bei denen das defekte Halbleiterbauelement hochohmig wird, d. h. der durch das defekte Halbleiterbauelement fließende Strom wird Null. Niederohmige Ausfälle, bei denen der Widerstandswert des defekten Halbleiterbauelementes Null wird, werden mit bekannten Anzeigevorrichtungen in der Regel vernachlässigt, da diese im Verhältnis zu hochohmigen Ausfällen weniger häufig vorkommen. Gleichwohl ist es wünschenswert, auch die seltener vorkommenden niederohmigen Ausfälle von Halbleiterbauelementen ebenfalls berücksichtigen zu können, um die Sicherheit der Anzeigevorrichtung weiterhin zu verbessern.

Aus der DE-OS 29 25 692 ist eine Lichtemissionsdioden-Anzeigevorrichtung bekannt geworden, bei der ein Lichtemissionsdioden-Feld mit einer Stromstabilisierschaltung versorgt wird, welches Diodenfeld in einer Parallelschaltung von einzelnen Serienschaltungen von Lichtemissionsdioden, welche Serienschaltungen jeweils eine Strombegrenzungskomponente in Form eines Ohmschen Widerstands enthalten, angeordnet ist.

Aufgabe der Erfindung ist es eine Elektronisch abgesicherte Schaltungsgruppen-Stromversorgung und eine Anzeigevorrichtung für eine sich ändernde Information zur Verfügung zu stellen, die eine sichere Detektion von Teil- oder Gesamtausfällen der Schaltungsgruppen-Stromversorgung und insbesondere der in Schaltungsgruppen zusammengefassten LEDs gewährleistet, welche insbesondere in einer Anlage zur Verkehrs-Regelung, -Steuerung, oder - Überwachung für Fahrzeuge, beispielsweise einer Verkehrsampel in Verbindung mit den dortigen, herkömmlichen, konstruktiv einfacheren Überwachungseinrichtungen zur Erfassung eines Gesamtausfalles der Anzeigevorrichtung verwendet werden kann, d. h. die Anzeigevorrichtung nach der Erfindung soll eine Ausfallcharakteristik besitzen, die weitgehend der Ausfallcharakteristik von Glühlampenanordnungen entspricht.

Die Lösung der Aufgabe gelingt mit den Merkmalen des Anspruches 1 und den kennzeichnenden Merkmalen des Anspruches 12.

Erfindungsgemäß ist vorgesehen, dass einer elektronisch abgesicherte Schaltungsgruppen-Stromversorgung wenigstens zwei parallel geschaltete Schaltungsgruppen zugeordnet sind, deren sich aus den Einzelströmen I_{R} im Betrieb zusammengesetzten Gesamtstrom N^{*}I_{R} in einem Punkt V zusammengeführt ist (N entspricht Anzahl Schaltuhgsgruppen), mit jeweils einer Schaltungsgruppe zugeordneten Reihen-Komparatoren die bei über- oder unterschreiten des Stromes I_{Rmax} durch die Schaltungsgruppe bzw. der an der Schaltungsgruppe anliegenden Spannung bezüglich eines voreingestellten Wertes jeweils einen von einem Normalwert verschiedenen Ergebniswert E_{R} liefern, mit einem Gesamt-Komparator der bei über- oder unterschreiten des zusammengesetzten Gesamtstroms N*I_{R} im Punkt V bezüglich eines voreingestellten Wertes N*I_{Rnom} einen von einem Normalwert verschiedenen Ergebniswert E_{G} liefert, mit einer Ergebnisüberwachungseinrichtung, die die Ergebnisse E_{R} und E_{G} überwacht, wobei bei vorliegen eines vom Normalwert verschiedenen Ergebniswerts E_{G}, E_{R} die die Schaltungsgruppen mit Strom versorgende Strom- oder Spannungsquelle ab- oder eingeschaltet wird.

Durch die Reihen-Komparatoren ist insbesondere sichergestellt, dass ein niederohmiger Fehlerfall in einer Schaltungsgruppe (beispielsweise im Falle einer Reihenschaltung von Leuchtdioden als Schaltungsgruppe oder auch im Falle von Heizelementen als Schaltungsgruppe, die einzeln für sich nicht über einen bestimmte Temperatur heizen - vermittels des durch sie fließenden Stromes - dürfen) sicher erkannt wird, hierdurch wird eine unter Umständen für die Schaltungsgruppen schädliche Überbelastung - und damit verbundenen Gefahren wie Überhitzung oder Zerstörung der Schaltungsgruppen - verhindert.

Von besonderem Vorteil ist die Strom- oder Spannungsquelle mit einen Energiespeicher verbunden,-wobei diese den Energiespeicher mit einem Ladestrom I_{L} speist. Hierdurch wird ein Zwischenspeichern von Energie für die Versorgung der Schaltungsgruppen ermöglicht.

Der Energiespeicher ist nach einer weiteren vorteilhaften Ausgestaltung der Erfindung durch einen Kondensator gebildet.

Bevorzugterweise sind die Schaltungsgruppen mit dem Energiespeicher permanent verbunden, wodurch diese von dem Energiespeicher mit Strom versorgt werden. Von Vorteil ist hierbei, dass die Schaltungsgruppen auch bei abgeschalteter Strom- oder Spannungsquelle von dem Energiespeicher mit Strom versorgt werden.

Besonders vorteilhaft ist der Ladestrom I_{L} so groß gewählt, dass nach erfolgtem Laden des Energiespeichers und dem darauf folgenden Ansteigen des Stromes I_{R} in den mit dem Energiespeichers verbundenen Schaltungsgruppen der Gesamt-Komparator durch Überschreiten des voreingestellten zusammengesetzten Gesamtstroms N*I_{Rnom} die Strom- oder Spannungsquelle durch Liefern eines vom Normalwert verschiedenen Ergebniswerts E_{G} vermittels der Ergebnisüberwachungseinrichtung abschaltet. Hierdurch wird sichergestellt, dass zunächst der Energiespeicher entladen wird und der Strom nicht über ein schädliches Maß hinaus ansteigt. Nach dem Entladen des Energiespeichers fällt der in die Schaltungsgruppen abfließende Strom I_{R} wieder ab, wodurch die einzelnen Ströme unter den Wert I_{Rnom} - und der zusammengesetzte Gesamtstrom damit unter den Wert N*I_{Rnom} - fallen, was zur Folge hat, dass der Ergebniswerte E_{G} seinen Normalwert annimmt und die Stromquelle wieder zum Laden des Energiespeichers angeschaltet wird. Ein weiterer sehr großer Vorteil in dieser Anordnung liegt darin, dass ein Fehler in den Reihen-Komparatoren, dem Gesamt-Komparator und der Ergebnisüberwachungseinrichtung sicher erkannt werden kann, da ständig wechselnde Zustände angenommen werden. Ein statisches Verhalten einer Baugruppe würde dazu führen, dass die Stromquelle permanent angeschaltet oder abgeschaltet bleibt, was eine sichere Fehlerdetektion ermöglicht.

Nach einer besonders bevorzugten Ausgestaltung der Erfindung sind die einer Schaltungsgruppe zugeordneten Reihen-Komparatoren so eingestellt, dass diese bei Überschreiten des maximalen Stromes I_{Rmax} in einer Schaltungsgruppe die Strom- oder Spannungsquelle durch Liefern eines vom Normalwert verschiedenen Ergebniswerts E_{R} vermittels der Ergebnisüberwachungseinrichtung eingeschaltet halten. Hierdurch wird der Strom I_{R} durch die Schaltungsgruppen nicht mehr abgesenkt. Der Vorteil hierbei liegt darin, dass ein mitunter gefährlicher (Brandgefahr) oder schwer zu erkennender niederohmiger Fehlerfall sicher erkannt werden kann, da ein sonst durch den Gesamt-Komparator fortgesetztes intervallartiges An- und Abschalten nicht beendet werde würde, da der Gesamtkomparator nur den Summenstrom aller Schaltungsgruppen erkennt. Eine sichere Fehlerdetektion eines niederohmigen Fehlerfalls in einer Schaltungsgruppe ist somit ermöglicht.

Von Vorteil ist der Ladestrom I_{L} größer als der über den voreingestellten Wert definierte Gesamtstrom N*I_{R}.

Eine weitere besonders bevorzugte Ausgestaltung der Erfindung sieht vor, dass ein träge ansprechendes Sicherungselement vorgesehen ist, dass alle Schaltungsgruppen und/ oder die Strom- oder Spannungsquelle von der Stromversorgung trennt, falls ein maximal zulässiger Stromwert I_{Smax} durch die Strom- oder Spannungsquelle erreicht ist. Der Vorteil hierbei liegt insbesondere darin, dass bei Fehlern in den Reihen-Komparatoren, dem Gesamt-Komparator und der Ergebnisüberwachungseinrichtung, das wie gesagt ein statisches Verhalten zur folge hätte, welche die Stromquelle permanent angeschaltet ließen die gesamte Anordnung stromfrei schaltet durch abschalten der Strom- oder Spannungsquelle durch das Sicherungselement. Beim Fehlerfall "permanent angeschaltete Stromversorgung" würde demnach der Strom ebenso Null werden wie im Fehlerfall "permanent angeschaltete Stromversorgung". D. h. in rascher Folge erfolgt die Deaktivierung aller Schaltungsgruppen. Auch der neiderohmige Fehlerfall, der zum starken Ansteigen eines Einzelstromes I_{R} und damit zum Angeschaltetlassen der Strom- oder Spannungsquelle durch den zugeordneten Reihen-Komparator führt, kann so von außen sicher erkannt werden. Auf diese Weise besitzt die erfindungsgemäße Schaltungsgruppen-Stromversorgung eine Ausfallcharakteristik, die mit einer bei Glühlampenanordnung bekannten Ausfallcharakteristik vergleichbar ist. Von besonderem Vorteil ist die erfindungsgemäße Schaltungsgruppen-Stromversorgung mit dieser zugeordneten Schaltungsgruppen daher in einer Umgebung einsetzbar, in der Ja-Nein-Überwachung - im Sinne von schadhaft/nicht schadhaft - der Betriebsfähigkeit als alleiniges Überwachungsmittel möglich, oder vorgesehen ist, also einfache ohne weitere konstruktive bzw. schaltungstechnische Maßnahmen und Aufwendungen verwendende Überwachungseinrichtungen vorliegen. Dem folgend kann das Sicherungselement durch eine einfache Schmelzsicherung mit vorbestimmten Durchbruchsstromwert ausgebildet sein.

Von Vorteil ist die Ergebnisüberwachungseinrichtung eine die Ergebniswerte E_{G}, E_{R} miteinander verknüpfende Verknüpfungseinrichtung, wobei weiterhin von Vorteil die Ergebniswerte digital sind und die Verknüpfungseinrichtung ein OR-Gatter ist.

Eine besonders bevorzugte Ausgestaltung der Erfindung sieht vor, dass die Schaltungsgruppen LED-Reihen sind, deren einzelne LEDs in Serie geschaltet sind.

Vorteilhafterweise bilden die Schaltungsgruppen ein Lichtemissionselement, das in einer weiteren vorteilhaften Ausgestaltung der Erfindung ein Anzeigelement ist, insbesondere ein Signalanzeigeelement.

Die Reihen-Komparatoren, der Gesamt-Komparator, die Schaltungsgruppen, die Ergebnisüberwachungseinrichtung, der Energiespeicher und die Strom- oder Spannungsquelle baulich eine Einheit bilden vorteilhafterweise baulich eine Einheit. Hierdurch wird ermöglicht, dass die Lichtemissionseinheit bzw. die Schaltungsgruppen zusammen mit der Schaltungsgruppen-Stromversorgung als eine Einheit beispielsweise in Form einer eine Glühbirne ersetzende Baueinheit ausgetauscht werden kann.

Ein weiterer Aspekt der Erfindung betrifft eine Anzeigevorrichtung für eine sich ändernde Information, wobei die Information durch Auswahl oder Kombination von einzelnen, auf einem Träger angeordneten Leuchtelementen dargestellt wird, wobei die Leuchtelemente durch Halbleiterbauelemente ausgebildet sind, insbesondere aus Leuchtdioden oder anderen integrierten Halbleiterschaltungen mit Komponenten zur Lichtemission, und die Halbleiterbauelemente in mehreren Schaltungsgruppen geschaltet sind, und jede Schaltungsgruppe strommäßig einen Nebenzweig eines Hauptzweiges bildet. Hierbei ist eine den Schaltungsgruppen zugeordnete Steuerschaltungseinrichtung vorgesehen ist, die bei Über- oder Unterschreitung eines in einem Nebenzweig fließenden Teilstromes I_{R}, insbesondere um einen vorbestimmten Stromschwellwert, in unmittelbar zeitlicher Folge eine Sperrung bzw. Deaktivierung des Hauptzweiges und damit aller Schaltungsgruppen steuert, und dass die Steuerschaltungseinrichtung bei Über- oder Unterschreitung des im Hauptzweig fließenden Stromes N*I_{R}, insbesondere um einen vorbestimmten Stromschwellwert, in unmittelbar zeitlicher Folge eine Sperrung bzw. Deaktivierung des Hauptzweiges und damit aller Schaltungsgruppen und/oder bei Unterschreitung des im Hauptzweig fließenden Stromes, insbesondere um einen vorbestimmten Stromschwellwert, in unmittelbar zeitlicher Folge die Aktivierung des Hauptzweiges und damit aller Schaltungsgruppen steuert.

Von Vorteil sind die Schaltungsgruppen durch wenigstens ein Leuchtelement ausgebildet.

Vorteilhafterweise sind die Leuchtelemente durch Halbleiterbauelemente, insbesondere aus Leuchtdioden, oder anderen integrierten Halbleiterschaltungen mit Komponenten zur Lichtemission ausgebildet.

Eine besonders bevorzugte Ausgestaltung der Erfindung sieht vor, dass die Steuerschaltungseinrichtung jeweils einer Schaltungsgruppe zugeordnete Reihen-Komparatoren aufweist, die bei über- oder unterschreiten des Stromes I_{R} durch die Schaltungsgruppe bezüglich des voreingestellten Wertes I_{Rmax} jeweils einen von einem Normalwert verschiedenen Ergebniswert ER liefern.

Eine nicht weniger vorteilhafte Ausgestaltung sieht vor, dass die Steuerschaltungseinrichtung einen Gesamt-Komparator aufweist, der bei über- oder unterschreiten des zusammengesetzten Gesamtstroms N*I_{R} im Punkt V bezüglich eines voreingestellten Wertes I_{Rnom} einen von einem Normalwert verschiedenen Ergebniswert E_{G} liefert.

Die Steuerschaltungseinrichtung weist nach einer vorteilhaften Ausgestaltung der Erfindung eine Ergebnisüberwachungseinrichtung auf, die die Ergebnisse E_{R} und E_{G} überwacht, wobei bei vorliegen eines vom Normalwert verschiedenen Ergebniswerts E_{G}, E_{R} eine Sperrung bzw. Deaktivierung des Hauptzweiges durch Abschalten einer die Schaltungsgruppen mit Strom versorgenden Strom- oder Spannungsquelle erfolgt.

Vorteilhafterweise ist eine Stromquelle vorgesehen, die einen Energiespeicher mit einem Ladestrom I_{L} speist.

Die Schaltungsgruppen sind von Vorteil mit dem Energiespeicher permanent verbunden und dieser ist parallel zu der die Schaltungsgruppen versorgenden Stromquelle geschaltet.

Der Ladestrom I_{L} ist nach einer besonders bevorzugten und vorteilhaften Ausgestaltung der Erfindung so groß gewählt, dass nach erfolgtem Laden des Energiespeichers und dem darauf folgenden Ansteigen des Stromes in den mit dem Energiespeichers verbundenen Schaltungsgruppen wenigstens ein einer Schaltungsgruppe zugeordneter Reihen-Komparator durch Überschreiten des maximalen Stromes I_{Rmax} und/oder der Gesamt-Komparator durch Überschreiten des voreingestellten zusammengesetzten Gesamtstroms N*I_{Rnom} die Strom- oder Spannungsquelle durch Liefern eines vom Normalwert verschiedenen Ergebniswerts E_{G}, E_{R} vermittels der Ergebnisüberwachungseinrichtung abschaltet.

Vorteilhafterweise sind die einer Schaltungsgruppe zugeordneten Reihen-Komparatoren so eingestellt, dass diese bei Überschreiten des maximalen Stromes I_{Rmax} in einer Schaltungsgruppe die Strom- oder Spannungsquelle durch Liefern eines vom Normalwert verschiedenen Ergebniswerts E_{R} vermittels der Ergebnisüberwachungseinrichtung eingeschaltet halten. Die ermöglicht wieder die sichere Detektion eines niederohmigen Fehlerfalls in einer Schaltungsgruppe.

Bevorzugterweise ist ein träge ansprechendes Sicherungselement vorgesehen, dass alle Schaltungsgruppen und/oder die Spannungs- oder Stromquelle von der eben dieser versorgenden Stromversorgung trennt, falls ein maximal zulässiger Stromwert I_{Smax} durch die Spannungs- oder Stromquelle erreicht ist.

Von Vorteil wird die Anzeigevorrichtung in einer Anlage zur Verkehrs-Regelung, -Steuerung, oder -Überwachung für Straßenfahrzeuge, insbesondere in einer Verkehrsampel verwendet.

Ebenso von Vorteil weist die Anlage zur Verkehrs-Regelung, -Steuerung, oder -Überwachung eine der Anzeigevorrichtung nachgeschaltete Überwachungseinrichtung auf, welche einen Gesamtausfall der Anzeigevorrichtung erfasst.

Vorteilhafterweise liefert die Anzeigevorrichtung ausgangsseitig ein Überwachungssignal für die Überwachungseinrichtung (2), welches zwei unterschiedliche elektrische Zustände besitzt, wobei der eine Zustand, Betriebszustand, einem ordnungsgemäßen Betrieb der Anzeigevorrichtung und der andere Zustand, Störungszustand, einem Gesamtausfall der Anzeigevorrichtung entspricht.

Von Vorteil ist ein die durch Spannungs- und Stromversorgung überwachender Komparator vorgesehen, der die von der Spannungs- und Stromversorgung gelieferte Spannung mit einem Mindestwert vergleicht, und bei Überschreiten des Mindestwerts ein Spannungsdetekt-Signal E_{S} liefert.

Der Komparator weist nach einer vorteilhaften Ausgestaltung einen Oszillator auf, der erst bei einer über dem Mindestwert liegenden Spannung zu Schwingen beginnt, und das Schwingungssignal an seinem Ausgang zur Verfügung stellt.

Der Komparator weist nach einer ebenso vorteilhaften Ausgestaltung einen Hochpass auf, der das Schwingungssignal des Oszillators filtert und danach zu dem Spannungsdetekt-Signal E_{S} gleichgerichtet.

Von Vorteil ist eine Ergebnisaddiereinrichtung vorgesehen, die der Ergebnisüberwachungseinrichtung und der Strom- oder Spannungsquelle zwischengeschaltet ist und die Strom- oder Spannungsquelle nur bei Vorliegen des Einschalt-/Ausschalt-Signal E_{E} und des Spannungsdetekt-Signals E_{S} einschaltet. Hierdurch werden nicht fehlerfreie Betriebszustände bei nicht ausreichender Spannungsversorgung vermieden.

Eine vorteilhafte Ausgestaltung der Erfindung sieht vor, dass eine Aufnahmeleistungsverminderungseinrichtung vorgesehen ist, die bei vorliegen eines externen Absenkungs-Signals S_{A} eine Verminderung der Leistungsaufnahme der Schaltungsgruppen und damit der ganzen Anzeigevorrichtung durch zeitweiliges Ausschalten der Strom- oder Spannungsquelle, unabhängig vom Einschalt-/Ausschalt-Signal E_{E} steuert.

Bevorzugterweise weist die Aufnahmeleistungsverminderungseinrichtung einen Oszillator aufweist, der bei: vorliegen des Absenkungs-Signals S_{A} ein Rechtecksignal liefert, welches mit dem Einschalt-/Ausschalt-Signal E_{E} derart verknüpft wird, dass die Strom- oder Spannungsquelle nur bei vorliegen eines positiven Pulses des Rechtecksignals und dem Einschalt/Ausschalt-Signal E_{E} eingeschaltet wird. Hierdurch werden in den Puls-Pausen die Schaltungsgruppen nicht mit Strom beaufschlagt, was eine Reduzierung der Leistungsaufnahme zur Folge hat.

Mit der erfindungsgemäßen Schaltungsanordnung der Anzeigevorrichtung gelingt es zum Einen, dass im Betrieb durch den Ausfall einzelner Leuchtelemente keine unerkannte sicherheitstechnisch bedenkliche Leuchtkraftschwächung auftritt. Fallen auf der anderen Seite im Laufe der Zeit einzelne Leuchtelemente durch hochohmige Unterbrechung aus, so wird die gesamte Leuchtkraft der. Anzeigevorrichtung kaum geschwächt, denn es werden die noch in Betrieb befindlichen Nebenzweige (Schaltungsgruppen) von Leuchtelementen mit einem größeren Teilstrom beaufschlagt, wodurch eine Kompensation des Leuchtkraftverlustes erreicht wird. Selbst der Ausfall einer oder mehrerer Nebenzweige (Schaltungsgruppen) führt noch nicht zu einem Totalausfall der Anzeigevorrichtung, da die Teilströme in den verbleibenden, noch intakten Nebenzweigen (Schaltungsgruppen) selbsttätig so weit angehoben werden, dass die von den noch intakten Leuchtelementen abgestrahlte Lichtintensität erhöht wird und die aufgrund des Ausfalls einer oder mehrerer Nebenzweige (Schaltungsgruppen) einhergehenden Leuchtkraftschwächung kompensiert wird. Erst nach Ausfall mehrerer Nebenzweige (Schaltungsgruppen) und einer damit einhergehenden erheblichen Erhöhung des sich auf die verbleibenden Zweige verteilenden Gesamtstroms werden aufgrund des nun in einem der verbleibenden Zweige übermäßigen Teilstromes die gesamte Anzeigevorrichtung durch ansprechen der Reihen-Komparatoren abgeschaltet. Dann liefert die Anzeigevorrichtung ein Ausfallsignal, welches von einer Überwachungseinrichtung erfasst werden kann. Auf diese Weise besitzt die erfindungsgemäße Anzeigevorrichtung eine Ausfallcharakteristik, die mit einer bei Glühlampenanordnung bekannten Ausfallcharakteristik vergleichbar ist. Von besonderem Vorteil ist die erfindungsgemäße Anzeigevorrichtung daher unmittelbar und ohne weitere konstruktive bzw. schaltungstechnische Maßnahmen und Aufwendungen mit einer bisher bei Anlagen zur Verkehrs-Regelung, -Steuerung, oder -Überwachung verwendeten Überwachungseinrichtung koppelbar, welche einen Gesamtausfall der Anzeigevorrichtung über eine einfachste Stromauswertung wie bei einem "Glühfadenbruch" erfasst.

Durch die Erfindung erübrigt sich eine regelmäßige Kontrolle des gegenwärtigen Leuchtzustandes des Anzeigevorrichtung durch Messen von Stromflussänderungen. Mit der erfindungsgemäßen Anzeigevorrichtung wird eine sichere und eindeutige Situation geschaffen, bei der nur zwei Zustände festgestellt werden müssen, nämlich ob Strom im Hauptzweig fließt und damit ein in Helligkeit und Leuchtdichte gleichmäßig definiertes sicheres Gesamtleuchtsignal besteht, oder im Hauptzweig kein Strom fließt bzw. dass die Anzeigevorrichtung nicht mehr leuchtet. Schwer messbare kleine Stromänderungen müssen somit nicht überwacht werden, wie es beim Stand der Technik der Fall ist.

Ein weiterer Vorteil besteht darin, dass die Anzeigevorrichtung nach der Erfindung flexibel gehandhabt werden kann, indem über die Auslegung der Steuerschaltungseinrichtung und der einzelnen maximalen Teilströme in jeder Schaltungsgruppe sowie der einzelnen Schaltzeiten der Komparatoren genau bestimmbar ist, bei welchem Leuchtfeldzerfall die Anzeigevorrichtung automatisch ausschalten soll.

Durch die Überwachung des Stromes in den einzelnen Schaltungsgruppen der aus den Halbleiterbauelementen gebildeten Schaltung wird erreicht, dass nach Ausfall eines vorbestimmten Prozentsatzes der Schaltungsgruppen durch Strom-Überlastung die Reihen-Komparatoren der noch funktionierenden Strompfade (durch die verbleibenden Schaltungsgruppen) die gesamte Anzeigevorrichtung automatisch ausschalteten und damit die Situation in einen sicheren Zustand gebracht wird. Damit kann über eine bekannte Überwachungseinrichtung der Ausfall in üblicher Weise signalisiert werden, um das Auswechseln der Anzeigevorrichtung veranlassen zu können.

Mit der erfindungsgemäßen Anzeigevorrichtung können nicht lediglich hochohmige Ausfälle von Halbleiterbauelementen, sondern nunmehr auch niederohmige Ausfälle berücksichtigt werden, wodurch die Sicherheit der Anzeigevorrichtung weiterhin erhöht wird. Ein hochohmiger Ausfall eines Leuchtelementes bewirkt, dass der elektrische Gesamtwiderstand des betroffenen Nebenzweiges unendlich und entsprechend der darin fließende Teilstrom Null wird. Entsprechend steigen die Teilströme in den verbleibenden Nebenzweigen an, einhergehend mit der Erhöhung der Lichtintensität usw. wie vorstehend geschildert. Bei einem niederohmigen Ausfall hingegen bleibt der betreffende Nebenzweig insgesamt intakt; es fließt ein Teilstrom, der nur geringfügig geringer ist als vor dem niederohmigen Ausfall. Erst bei mehreren niederohmigen Ausfällen wird der Teilstrom im betreffenden Nebenzweig so groß, dass die Anzeigevorrichtung vollständig. deaktiviert.

Dem Prinzip der Erfindung folgend eignen sich beliebige Gleich- oder Wechselspannungen die einen dem Betrag nach ausreichenden Strom durch die Schaltungsgruppen bewirken für den Betrieb der Anzeigevorrichtung. Durch schnelles Schalten der Strom- oder Spannungsquelle wird immer gewährleistet, dass der dem Betrag nach richtige Strom durch die Schaltungsgruppen fließt. So ist die Anzeigevorrichtung beispielsweise im 220V-Netz und im 110V-Netz ohne Anpassungen oder Änderungen betreibbar.

Vorteilhafte Weiterbildungen der Erfindung ergeben sich aus den weiteren Unteransprüchen sowie aus deren Unterkombinationen.

Weitere Merkmale, Vorteile und Zweckmäßigkeiten der Erfindung ergeben sich aus der nachfolgenden Beschreibung eines Ausführungsbeispieles der Erfindung anhand der Zeichnung. Es zeigt:
- Figur 1: ein schematisches Schaltbild einer Anzeigevorrichtung und einer darin realisierten elektronisch abgesicherte Schaltungsgruppen-Stromversorgung nach einem bevorzugten Ausführungsbeispiel der Erfindung;
- Figur 2: ein schematisches Schaltbild einer Anzeigevorrichtung und einer darin realisierten elektronisch abgesicherte Schaltungsgruppen-Stromversorgung aus Figur 1 bei der zusätzlich eine die Eingangspannung überwachende Schaltung realisiert ist,
- Figur 3: ein schematisches Schaltbild einer Anzeigevorrichtung und einer darin realisierten elektronisch abgesicherte Schaltungsgruppen-Stromversorgung aus Figur 1 bei der zusätzlich eine erfindungsgemäße Aufnahmeleistungsverminderungseinrichtung realisiert ist,
- Figur 4 und 5: eine schematische Darstellung der Ausfallcharakteristik einer Anzeigevorrichtung nach dem Ausführungsbeispiel, und
- Figur 6: eine schematische Darstellung einer erfindungsgemäßen Anzeigevorrichtung nach einem bevorzugten Ausführungsbeispiel.

In den Figuren des Ausführungsbeispiels mit gleichen Bezugszeichen versehene Elemente sind gleiche oder gleich wirkende Elemente.

Das in den Figuren dargestellte Ausführungsbeispiel zeigt eine erfindungsgemäßen Anzeigevorrichtung 1 für eine sich ändernde Information mit einer elektronisch abgesicherte Schaltungsgruppen-Stromversorgung 31 bis 35, 4, 5, 6, 7, wobei die Information durch Auswahl oder Kombination von einzelnen, auf einem Träger T angeordneten Leuchtelementen L dargestellt wird, und die Leuchtelemente L durch Halbleiterbauelemente ausgebildet sind, insbesondere aus Leuchtdioden 2a oder anderen integrierten Leuchtmitteln.

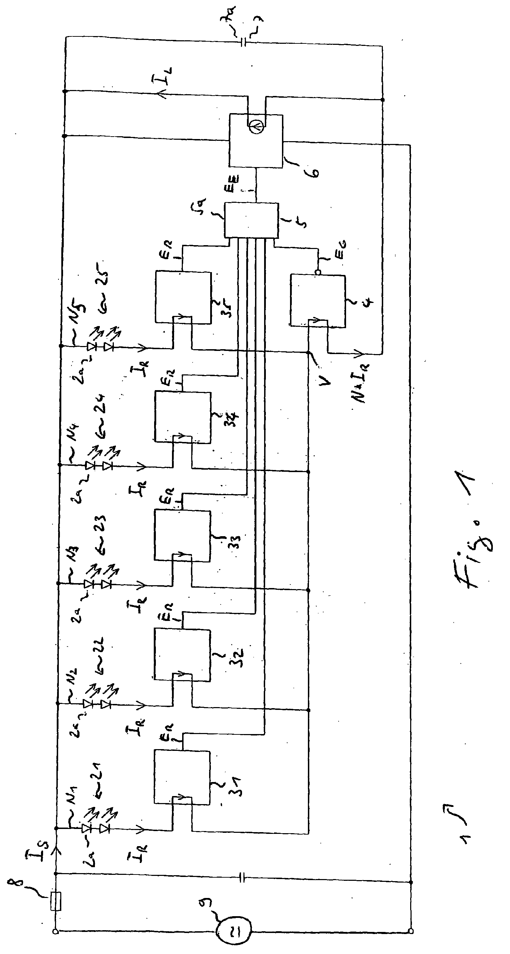

In Figur 1 ist ein schematisches Schaltbild einer erfindungsgemäßen elektronisch abgesicherten Schaltungsgruppen-Stromversorgung 31 bis 35, 4, 5, 6, 7 integriert in einem LED-Modul als Anzeigevorrichtung 1 abgebildet, bei dem die Schaltungsgruppen 21 bis 25 durch Serienschaltungen von LEDs 2a gebildet werden.

Die Anzeigevorrichtung 1 ist an eine Gleichspannungs-Stromversorgung 9 angeschlossen. Diese Gleichspannung muss nicht stabilisiert sein und kann in ihrem Betrag in weiten Grenzen frei gewählt werden. Die Gleichspannung kann direkt durch Gleichrichtung aus der Netzwechselspannung gewonnen werden. Insbesondere kann es auch eine Wechselspahnungs-Stromversorgung sein, hierbei müssten jedoch die Komparatoren 31 bis 35 und 4 sowie die Ergebnisüberwachungseinrichtung 5 und gegebenenfalls die Strom- oder Spannungsquelle 6 mit einer aus der Wechselspannung in üblicher Weise gewonnenen Gleichspannung versorgt werden. Das (hier nicht abgebildete) Steuergerät überwacht wie bei einer Glühlampe den an von der gesamten Anzeigevorrichtung 1 aufgenommenen Strom.

Die Anzeigevorrichtung 1 besteht aus beliebig vielen parallel geschalteten Schaltungsgruppen 21 bis 25 in Form von LEDs 2a in Reihenschaltung, die jeweils aus beliebig vielen LEDs bestehen. Der Strom I_{R} durch die Schaltungsgruppen 21 bis 25 wird jeweils von einem Reihen-Komparator 31 bis 35 mit einem einstellbaren Schwellwert I_{Rmax} verglichen. Im Normalbetrieb liefern alle Reihen-Komparatoren an ihrem Ausgang einen digitalen Low-Pegel (Normalwert). Wenn der Strom durch eine Reihe den auslösenden Schwellwert überschreitet, liefert der entsprechende Komparator an seinem Ausgang einen digitalen H-Pegel (Ergebniswert ER).

Der Strom durch alle LED-Reihen wird im Knoten V zusammengeführt und der sich aus den Einzelströmen I_{R} zusammensetzende Gesamtstrom N*I_{R} wird von einem Gesamt-Komparator 4 mit seinem Sollwert N*I_{Rnom} verglichen. N ist dabei die Anzahl der Schaltungsgruppen und I_{R} ist der Strom durch eine Reihe. Wenn der Gesamtstrom N*I_{R} den Sollwert N*I_{Rnom} unterschreitet, liefert der Gesamt-Komparator an seinem Ausgang einen digitalen High-Pegel (Ergebniswert E_{G}), wenn der Sollwert überschritten wird, einen digitalen Low-Pegel.

Die Ausgangssignale E_{R}, E_{R} der Reihen-Komparatoren 31 bis 35 und des Gesamt-Komparators 4 werden durch eine als OR-Gatter 5a ausgebildete Ergebnisüberwachungseinrichtung 5 verknüpft, dessen Ausgang das Einschalt-/Ausschalt-Signal E_{E} für eine gesteuerte Stromquelle 6 liefert. Die gesteuerte Stromquelle 6 speist einen Energiespeicher 7, der durch einen Kondensator 7a gebildet ist, mit einem Ladestrom I_{L}, wenn das Einschalt-/Ausschalt-Signal E_{E} auf High-Pegel liegt. Der Ladestrom I_{L} ist so bemessen, dass er größer ist als der gewünschte zusammengesetzte Strom N*I_{Rnom} durch alle Schaltungsgruppen. Dadurch steigt die Spannung am Energiespeicher 7 und der Summenstrom N*I_{R} nimmt zu. Wenn der Summenstrom den gewünschten Strom N*I_{Rnom} erreicht bzw. übersteigt, liefert der Gesamt-Komparators 4 als Ergebniswert E_{G} logisch Löw. Im fehlerfreien Betrieb hat der Strom durch jede Schaltungsgruppe 21 bis 25 in diesem Moment den gewünschten Strom I_{R} = I_{Rnom}, so dass der auslösende Schwellstrom I_{R} = I_{Rmax} der Reihen-Komparatoren noch nicht erreicht ist und alle Reihen-Komparatoren Low-Pegel liefern. Dadurch geht das Einschalt-/Ausschalt-Signal E_{E} auf Low und die Stromquelle schaltet ab. Die Schaltungsgruppen werden nun vom Energiespeicher 7 gespeist, dessen Spannung dabei abnimmt. Dadurch sinkt auch der Summenstrom N*I_{R} und der Gesamt-Komparator schaltet die Stromquelle bei Sinken des Gesamt-Stromes unter den Wert N*I_{Rnom} wieder ein.

Dieser Vorgang wiederholt sich periodisch, so dass der Summenstrom N*I_{R} auf seinem gewünschten Wert N*I_{Rnom} (um diesen pegelnd) gehalten wird. Die Schaltfrequenz wird ohne weitere Maßnahmen von den Verzögerungszeiten der beteiligten Bauteile (Komparatoren, Ergebnisüberwachungseinrichtung, Stromquelle) bestimmt. Durch Einbau einer Hysterese in die Kennlinie des Gesamt-Komparators 4 kann die Schaltfrequenz auf einen kleineren Wert als diesen Maximalwert eingestellt werden.

Diese dynamische Steuerung des Summenstromes ist gleichzeitig eine Sicherung gegen Fehler in den Komparatoren, der Ergebnisüberwachungseinrichtung und der Stromquelle. Wenn eines dieser Bauteile ausfällt, liefert es einen beliebigen, aber konstanten Pegel am Ausgang. Dadurch wird der Energiespeicher 7 entweder nicht mehr geladen oder immer geladen. Da ein andauerndes Laden des Energiespeichers zu einem so hohen Summenstrom führt, dass die Sicherung 8 durchbrennt, wird in beiden Fällen kein Strom mehr durch die Anzeigevorrichtung 1 aufgenommen.

Wenn eine oder mehrere Schaltungsgruppen 21 bis 25 ausfallen und keinen Strom mehr führen (üblicher Ausfallmechanismus einer LED) steigt der Strom durch die verbleibenden intakten Schaltungsgruppen an, weil der Summenstrom N*I_{R} durch den Summen-Komparator konstant (auf N*I_{Rnom}) gehalten wird. Wenn eine bestimmte Anzahl von Schaltungsgruppen ausgefallen ist, wird dadurch der auslösende Schwellstrom I_{Rmax} der Reihen-Komparatoren in den verbleibenden Schaltungsgruppen überschritten. Durch den High-Pegel des Ergebniswerts E_{R} am Ausgang dieser Komparatoren wird das Einschalt-/Ausschalt-Signal E_{E} dauerhaft auf High gelegt, so dass die Stromquelle 6 nicht mehr ausschaltet und die Sicherung 8 durchbrennt. Ausfälle der Reihen-Komparatoren 31 bis 35 werden dadurch abgesichert, dass ein fehlerhaft High-Signal führender Reihen-Komparator genügt, um das Einschalt-/Ausschalt-Signal E_{E} auf High-Pegel zu legen, was wider zum Durchbrennen der Sicherung 8 führt. Es müssten also alle Reihen-Komparatoren 31 bis 35 der noch intakten Schaltungsgruppen irrtümlich Low-Pegel liefern, damit ein Fehler unerkannt bleibt. Dies kann bei einer genügend großen Anzahl von Schaltungsgruppen und damit Reihen-Komparatoren ausgeschlossen werden. Durch die Schwelle I_{Rmax} der Reihen-Komparatoren kann festgelegt werden, wie viele Reihen ausfallen dürfen, bevor das Modul abschaltet.

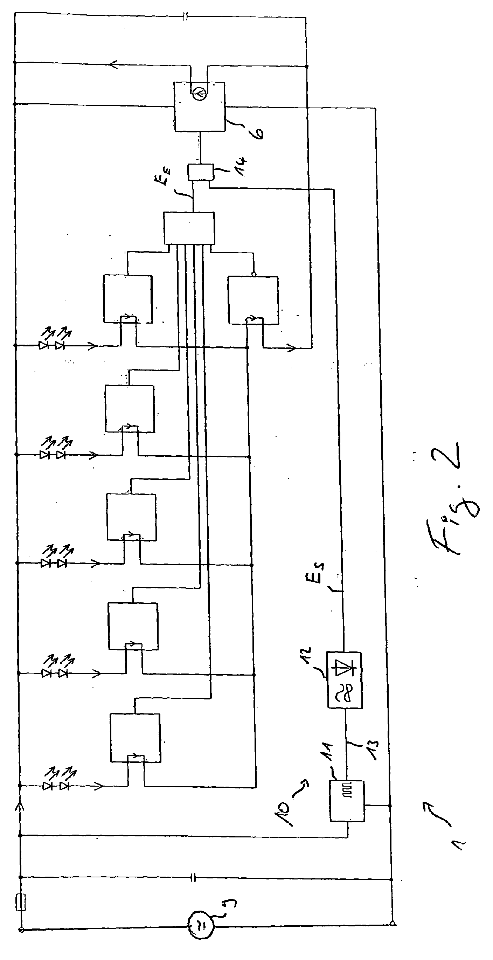

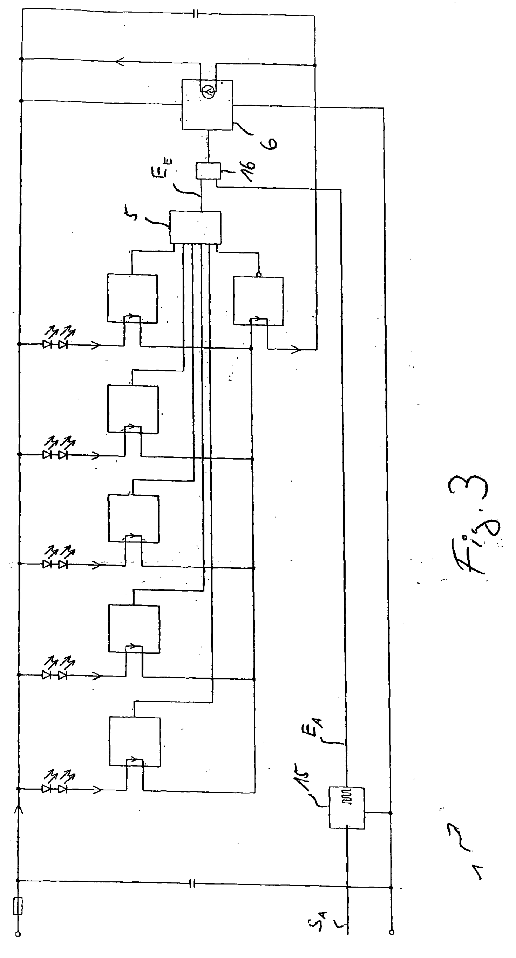

In den Figur 4 und 5 ist eine Situation über der Zeit t simuliert, in der bei der Simulationszeit tl die Schaltungsgruppe 21 ausfällt (hochohmiger Ausfall). In Figur 5 ist der Strom I_{R} = I_{R21} + I_{R22} durch die Schaltungsgruppe 21 und 22 dargestellt. Bei Ausfall der Schaltungsgruppe 21 nimmt der Strom I_{R22} durch Schaltungsgruppe 22 um 25% zu. Dadurch wird die Schwelle I_{Rmax}, die ebenfalls eingezeichnet ist, überschritten und das Einschalt-/Ausschalt-Signal E_{E} nimmt dauerhaft High-Pegel an (Figur 4). Wie zu erkennen ist, nimmt der Strom durch die intakten Schaltungsgruppen sehr schnell zu, was die Sicherung 8 zum Durchbrennen bringt (im Stromverlauf nicht dargestellt).

Häufig wird bei Signaleinrichtungen auch gefordert, dass die Anzeigevorrichtung erst bei einer bestimmten Mindestspannung der Spannungs- und Stromversorgung 9 zu arbeiten - und damit zu leuchten - beginnt, um zu verhindern, dass das Informationssignal der Anzeigevorrichtung nur schlecht sichtbar ist. Dies kann durch eine Erweiterung der Schaltung erreicht werden wie sie in Figur 2 dargestellt ist.

Die an der Anzeigevorrichtung 1 durch Spannungs- und Stromversorgung 9 anliegende Spannung wird durch einen Komparator 10 mit einem Mindestwert (beispielsweise bei einer Versorgungsspannung von ca. 115V) verglichen. Durch das Überschreiten dieses Mindestwert, wird ein Oszillator 11 schwingfähig, der ein Rechtecksignal 13 mit einstellbarer Frequenz liefert. Das Rechtecksignal 13 wird durch einen Hochpass 12 gefiltert und danach zu dem Spannungsdetekt-Signal E_{S} gleichgerichtet. Das Spannungsdetekt-Signal E_{S} wird mit dem Einschalt-/Ausschalt-Signal E_{E} durch eine als AND-Gatter ausgebildete Ergebnisaddiereinrichtung 14 verknüpft. Nur bei vorliegen beider Signale E_{E} und E_{S} wird die Strom- oder Spannungsquelle 6 angeschaltet. Dadurch kann die Strom- oder Spannungsquelle 6 erst einschalten, wenn die Mindestspannung durch die Spannungs- und Stromversorgung 9 erreicht ist. Bei Fehlern im Komparator 10 und insbesondere im Oszillator 11 bricht die Schwingung zusammen und am Ausgang des Oszillators 11 liegt eine beliebige Gleichspannung. Wegen des Hochpasses 12 nimmt das Spannungsdetekt-Signal E_{S} dadurch Low-Pegel an und schaltet die Strom- oder Spannungsquelle 6 und damit die ganze Anzeigevorrichtung ab, was wieder eine Detektion der Fehlfunktion ermöglicht.

Nach einem ähnlichen Prinzip ist auch eine Intensitätsabsenkung realisiert, die durch das in der Signalanlage befindliche Steuergerät (nicht gezeigt) ausgelöst werden kann; beispielsweise für eine Nachtabsenkung in der nur eine reduzierte Leistungsaufnahme gewünscht ist.

In Figur 3 ist eine Realisierung einer Aufnahmeleistungsverminderungseinrichtung 15 gezeigt, hierbei wird ein in der Aufnahmeleistungsverminderungseinrichtung befindlicher Oszillator direkt durch das Steuergerät durch ein Absenkungs-Signal S_{A} eingeschaltet. Die daraufhin vom Oszillator gelieferte Rechteckspannung wird als Taktsignal für einen ladbaren Rückwärtszähler verwendet. Das Überlaufsignal des Zählers ist eine Pulsspannung mit einem Tastverhältnis, das durch das Ladewort des Zählers eingestellt werden kann. Die Pulsspannung wird direkt als Anschalt-Signal E_{A} an ein der Strom- oder Spannungsquelle 6 und das Anschalt-Signal mit dem Einschalt-/Ausschalt-Signal E_{E} verknüpfenden AND-Gatter 16 ausgewertet. Nur bei vorliegen beider Signale wird die Strom- oder Spannungsquelle 6 eingeschaltet. Die Periode der Pulsspannung wird bei dieser Anwendung im Millisekundenbereich gewählt, so dass das LED-Modul während des Pulses normal arbeitet und während der Pulspause abgeschaltet ist. Wegen der Trägheit des Auges wird eine mittlere Intensität wahrgenommen, die der durch den Gesamt-Komparator eingestellten Intensität entspricht, jedoch multipliziert mit dem Tastverhältnis der Pulsspannung. Bei Fehlern im Oszillator/Zähler wird das Modul entweder abgeschaltet oder mit maximaler Intensität betrieben, entsprechend dem Tastverhältnis.

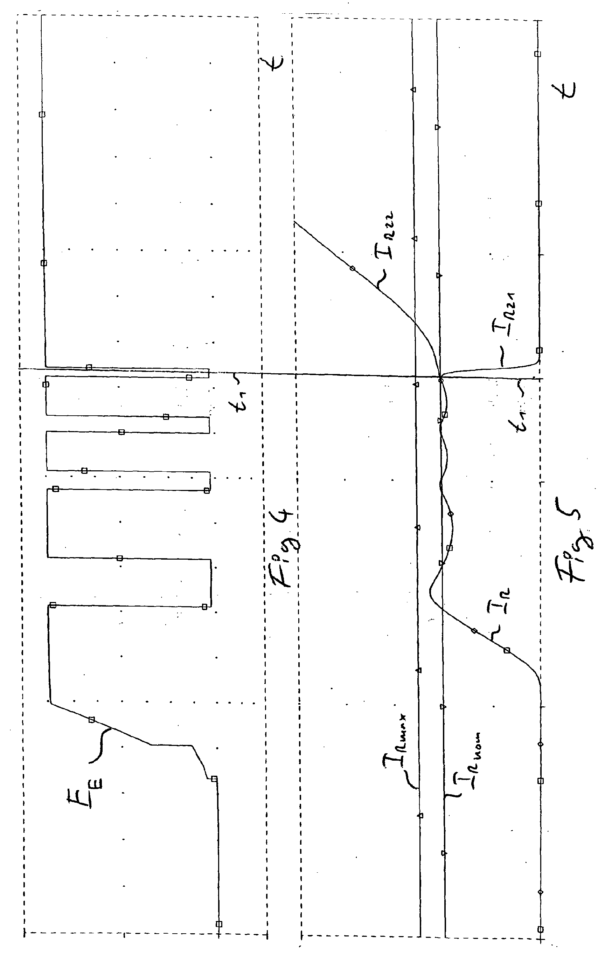

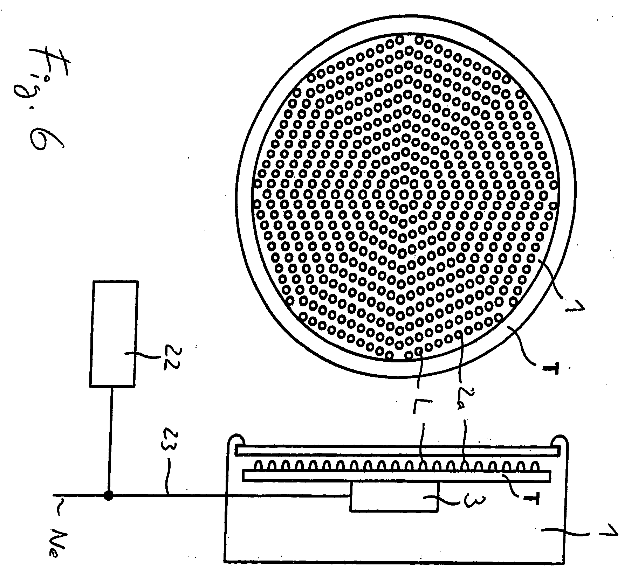

Das in Figur 6 dargestellte Ausführungsbeispiel zeigt eine erfindungsgemäßen Anzeigevorrichtung 1 für eine sich ändernde Information, wobei die Information durch Auswahl oder Kombination von einzelnen, auf einem Träger T angeordneten Leuchtelementen L dargestellt wird, und die Leuchtelemente L durch Halbleiterbauelemente ausgebildet sind, insbesondere aus Leuchtdioden 2a oder anderen integrierten Halbleiterschaltungen mit Komponenten zur Lichtemission. Die Halbleiterbauelemente sind in mehreren Schaltungsgruppen, geschaltet.

Über Anschlussleitungen 23 ist die erfindungsgemäße Anzeigevorrichtung 1 mit dem Potential einer Netz-Versorgungsspannung Ne und mit einer bisher bei Anlagen zur Verkehrs-Regelung, -Steuerung oder -Überwachung verwendeten Überwachungseinrichtung 22 verbunden, die Überwachungseinrichtung 22 ist mit der erfindungsgemäßen Schaltung gekoppelt. Die Besonderheit der erfindungsgemäßen Anzeigevorrichtung 1 liegt somit gerade darin, dass sie mit einer bislang bei Ampeln überlicherweise zum Einsatz gelangenden Überwachungsschaltung 22 koppelbar ist, welche einen Gesamtausfall der Anzeigevorrichtung 1 über eine einfachste Stromauswertung, quasi wie bei einem "Glühfadenbruch" erfasst.

Mittels einer in der Technik üblichen Überwachungseinrichtung 22 kann dieser Zustand registriert und einer Zentrale gemeldet werden. Das Personal ist dann aufgefordert, die betreffende Anzeigevorrichtung auszutauschen.

Die Vorteile einer LED kommen dabei voll zum Tragen, hohe Lebensdauer, wenig Verlustsleistung, mechanische Stabilität, Temperatur-Unempfindlichkeit und schließlich Einsparung von sonst üblichen Transformatoren in der Anzeigevorrichtung.

### Bezugszeichenliste

- 1: Anzeigeelement
- 21 bis 25: Schaltungsgruppen
- 2a: LEDs
- 3: Steuerschaltungseinrichtung
- 31 bis 35: Reihen-Komparatoren
- 4: Gesamt-Komparator
- 5: Ergebnisüberwachungseinrichtung
- 5a: OR-Gatter
- 6: Strom- oder Spannungsquelle
- 7: Energiespeicher
- 7a: Kondensator
- 8: Sicherungselement
- 9: Stromversorgung
- 10: Komparator
- 11: Oszillator
- 12: Hochpass
- 13: Rechtecksignal
- 14: Ergebnisaddiereinrichtung, AND-Gatter
- 15: Aufnahmeleistungsverminderungseinrichtung
- 16: AND-Gatter
- 22: Überwachungseinrichtung
- 23: Anschlussleitungen
- Ne: Netz-Versorgungsspannung
- I_{R}, I_{Rnom}. I_{Rmax}: Einzelströme, gewünscht, maximal
- N*I_{R}: zusammengesetzter Gesamtstrom
- V: gemeinsamer Punkt
- I_{L}: Ladestrom
- I_{Smax}: maximal zulässiger Stromwert
- E_{G}, E_{R}: Ergebniswerte
- E_{E}: Einschalt-/Ausschalt-Signal
- E_{S}: Spannungsdetekt-Signal
- E_{A}: Anschalt-Signal
- S_{A}: Absenkungs-Signal
- L: Leuchtelemente
- T: Träger

## Patentansprüche

1. Elektronisch abgesicherte Schaltungsgruppen-Stromversorgung (31 bis 35, 4, 5, 6, 7), der wenigstens zwei parallel geschaltete Schaltungsgruppen (21 bis 25) zugeordnet sind, deren sich aus den Einzelströmen I_{R} im Betrieb zusammengesetzten Gesamtstrom N*I_{R} in einem Punkt V zusammengeführt ist (N entspricht Anzahl Schaltungsgruppen),
mit jeweils einer Schaltungsgruppe (21 bis 25) zugeordneten Reihen-Komparatoren (31 bis 35) die bei über- oder unterschreiten des Stromes I_{Rmax} durch die Schaltungsgruppe bzw. der an der Schaltungsgruppe anliegenden Spannung bezüglich eines voreingestellten Wertes jeweils einen von einem Normalwert verschiedenen Ergebniswert E_{R} liefern,
mit einem Gesamt-Komparator (4) der bei über- oder unterschreiten des zusammengesetzten Gesamtstroms N*I_{R} im Punkt V bezüglich eines voreingestellten Wertes N*I_{Rnom} einen von einem Normalwert verschiedenen Ergebniswert E_{G} liefert,
mit einer Ergebnisüberwachungseinrichtung (5), die die Ergebnisse E_{R} und E_{G} überwacht,
wobei bei vorliegen eines vom Normalwert verschiedenen Ergebniswerts E_{G}, E_{R} die die Schaltungsgruppen mit Strom versorgende Strom- oder Spannungsquelle (6) ab- oder eingeschaltet wird.

2. Elektronisch abgesicherte Schaltungsgruppen-Stromversorgung nach Anspruch 1,
**dadurch gekennzeichnet,**
**dass** die Strom- oder Spannungsquelle (6) einen Energiespeicher (7), der insbesondre durch einen Kondensator (7a) gebildet ist, mit einem Ladestrom I_{L} speist.

3. Elektronisch abgesicherte Schaltungsgruppen-Stromversorgung nach Anspruch 2,
**dadurch gekennzeichnet,**
**dass** die Schaltungsgruppen (21 bis 25) mit dem Energiespeicher (7) permanent verbunden sind.

4. Elektronisch abgesicherte Schaltungsgruppen-Stromversorgung nach Anspruch 3,
**dadurch gekennzeichnet,**
**dass** der Ladestrom I_{L} so groß gewählt ist, dass nach erfolgtem Laden des Energiespeichers (7) und dem darauf folgenden Ansteigen des Stromes I_{R} in den mit dem Energiespeicher verbundenen Schaltungsgruppen (21 bis 25) der Gesamt-Komparator (4) durch Überschreiten des voreingestellten zusammengesetzten Gesamtstroms N*I_{Rnom} die Strom- oder Spannungsquelle (6) durch Liefern eines vom Normalwert verschiedenen Ergebniswerts E_{G} vermittels der Ergebnisüberwachungseinrichtung (5) abschaltet.

5. Elektronisch abgesicherte Schaltungsgruppen-Stromversorgung nach einem der Ansprüche 1 bis 4,
**dadurch gekennzeichnet,**
**dass** die einer Schaltungsgruppe (21 bis 25) zugeordneten Reihen-Komparatoren (31 bis 35) so eingestellt sind, dass diese bei Überschreiten des maximalen Stromes I_{Rmax} in einer Schaltungsgruppe die Strom- oder Spannungsquelle (6) durch Liefern eines vom Normalwert verschiedenen Ergebniswerts E_{R} vermittels der Ergebnisüberwachungseinrichtung (5) eingeschaltet halten.

6. Elektronisch abgesicherte Schaltungsgruppen-Stromversorgung nach einem der Ansprüche 2 bis 5,
**dadurch gekennzeichnet,**
**dass** der Ladestrom I_{L} größer als der über den voreingestellten Gesamtstrom N*I_{Rnom} ist.

7. Elektronisch abgesicherte Schaltungsgruppen-Stromversorgung nach einem der Ansprüche 1 bis 6,
**dadurch gekennzeichnet,**
**dass** ein träge ansprechendes Sicherungselement (8) vorgesehen ist, dass alle Schaltungsgruppen (21 bis 25) von der Strom- oder Spannungsquelle (6) trennt, falls ein maximal zulässiger Stromwert I_{Smax} durch die Spannungs- oder Stromquelle (6) erreicht ist.

8. Elektronisch abgesicherte Schaltungsgruppen-Stromversorgung nach einem der Ansprüche 1 bis 7,
**dadurch gekennzeichnet,**
**dass** ein träge ansprechendes Sicherungselement (8) vorgesehen ist, dass die Strom- oder Spannungsquelle (6) von der Stromversorgung (9) trennt, falls ein maximal zulässiger Stromwert I_{Smax} durch die Spannungs- oder Stromquelle (6) erreicht ist.

9. Elektronisch abgesicherte Schaltungsgruppen-Stromversorgung nach einem der Ansprüche 1 bis 8,
**dadurch gekennzeichnet,**
**dass** die Ergebnisüberwachungseinrichtung (5) eine die Ergebniswerte E_{G}, E_{R} miteinander verknüpfende Verknüpfungseinrichtung (5a) ist.

10. Elektronisch abgesicherte Schaltungsgruppen-Stromversorgung nach Anspruch 9,
**dadurch gekennzeichnet,**
**dass** die Ergebniswerte digital sind und die Verknüpfungseinrichtung ein OR-Gatter (5a) ist.

11. Elektronisch abgesicherte Schaltungsgruppen-Stromversorgung nach einem der Ansprüche 1 bis 10,
**dadurch gekennzeichnet,**
**dass** die Schaltungsgruppen (21 bis 25) LED-Reihen sind, deren einzelne LEDs (2a) in Serie geschaltet sind.

12. Elektronisch abgesicherte Schaltungsgruppen-Stromversorgung nach einem der Ansprüche 1 bis 11,
**dadurch gekennzeichnet,**
**dass** die Schaltungsgruppen (21 bis 25) ein Lichtemissionselement bilden.

13. Elektronisch abgesicherte Schaltungsgruppen-Stromversorgung nach Anspruch 12,
**dadurch gekennzeichnet,**
**dass** das Lichtemissionselement ein Anzeigelement ist, insbesondere ein Signal-Anzeigeelement.

14. Elektronisch abgesicherte Schaltungsgruppen-Stromversorgung nach einem der Ansprüche 1 bis 13,
**dadurch gekennzeichnet,**
**dass** die Reihen-Komparatoren (31 bis 35), der Gesamt-Komparator (4), die Schaltungsgruppen (21 bis 25), die Ergebnisüberwachungseinrichtung (5), der Energiespeicher (7) und die Strom- oder Spannungsquelle (6) baulich eine Einheit bilden.

15. Anzeigevorrichtung (1) für eine sich ändernde Information,
wobei die Information durch Auswahl oder Kombination von einzelnen,
auf einem Träger (T) angeordneten Leuchtelementen (L) dargestellt wird,
wobei die Leuchtelemente durch Halbleiterbauelemente ausgebildet sind, insbesondere aus Leuchtdioden (2a) oder anderen integrierten Halbleiterschaltungen mit Komponenten zur Lichtemission,
und die Halbleiterbauelemente in mehreren Schaltungsgruppen (21 bis 25) geschaltet sind, und jede Schaltungsgruppe strommäßig einen Nebenzweig (Ni) eines Hauptzweiges bildet,
**dadurch gekennzeichnet,**
**dass** eine den Schaltungsgruppen zugeordnete Steuerschaltungseinrichtung (3) vorgesehen ist, die bei Über- oder Unterschreitung eines in einem Nebenzweig (Ni) fließenden Teilstromes I_{R}, insbesondere um einen vorbestimmten Stromschwellwert, in unmittelbar zeitlicher Folge eine Sperrung bzw. Deaktivierung des Hauptzweiges (H) und damit aller Schaltungsgruppen (21 bis 25) steuert, und dass die Steuerschaltungseinrichtung bei Über- oder Unterschreitung des im Hauptzweig (H) fließenden Stromes N*I_{R}, insbesondere um einen vorbestimmten Stromschwellwert, in unmittelbar zeitlicher Folge eine Sperrung bzw. Deaktivierung des Hauptzweiges (H) und damit aller Schaltungsgruppen und/oder bei Unterschreitung des im Hauptzweig (H) fließenden Stromes, insbesondere um einen vorbestimmten Stromschwellwert, in unmittelbar zeitlicher Folge die Aktivierung des Hauptzweiges (H) und damit aller Schaltungsgruppen steuert.

16. Anzeigevorrichtung nach Anspruch 15,
**dadurch gekennzeichnet,**
**dass** die Schaltungsgruppen (21 bis 25) durch wenigstens ein Leuchtelement ausgebildet sind.

17. Anzeigevorrichtung nach Anspruch 16,
**dadurch gekennzeichnet,**
**dass** die Leuchtelemente durch Halbleiterbauelemente, insbesondere aus Leuchtdioden (2a), oder anderen integrierten Halbleiterschaltungen mit Komponenten zur Lichtemission ausgebildet sind.

18. Anzeigevorrichtung nach Anspruch 15,
**dadurch gekennzeichnet,**
**dass** die Schaltungsgruppen (21 bis 25) durch wenigstens ein Halbleiterbauelement ausgebildet sind.

19. Anzeigevorrichtung nach Anspruch 18,
**dadurch gekennzeichnet,**
**dass** die Halbleiterbauelemente Leuchtelemente sind, insbesondere Leuchtdioden (2a), oder andere integrierte Halbleiterschaltungen mit Komponenten zur Lichtemission.

20. Anzeigevorrichtung nach einem der Ansprüche 15 bis 19,
**dadurch gekennzeichnet,**
**dass** die Steuerschaltungseinrichtung (3) jeweils einer Schaltungsgruppe (21 bis 25) zugeordnete Reihen-Komparatoren (31 bis 35) aufweist, die bei über- oder unterschreiten des Stromes I_{R} durch die Schaltungsgruppe bezüglich des voreingestellten Wertes I_{Rmax} jeweils einen von einem Normalwert verschiedenen Ergebniswert E_{R} liefern.

21. Anzeigevorrichtung nach einem der Ansprüche 15 bis 20,
**dadurch gekennzeichnet,**
**dass** die Steuerschaltungseinrichtung (3) einen Gesamt-Komparator (4) aufweist, der bei überoder unterschreiten des zusammengesetzten Gesamtstroms N*I_{R} im Punkt V bezüglich eines voreingestellten Wertes I_{Rnom} einen von einem Normalwert verschiedenen Ergebniswert E_{G} liefert.

22. Anzeigevorrichtung nach einem der Ansprüche 15 bis 21,
**dadurch gekennzeichnet,**
**dass** die Steuerschaltungseinrichtung (3) eine Ergebnisüberwachungseinrichtung (5) aufweist, die die Ergebnisse E_{R} und E_{G} überwacht, wobei bei vorliegen eines vom Normalwert verschiedenen Ergebniswerts E_{G}, E_{R} eine Sperrung bzw. Deaktivierung des Hauptzweiges (H) durch Abschalten einer die Schaltungsgruppen mit Strom versorgenden Strom- oder Spannungsquelle (6) erfolgt.

23. Anzeigevorrichtung nach Anspruch 22,
**dadurch gekennzeichnet,**
**dass** die Strom- oder Spannungsquelle (6) einen Energiespeicher (7) mit einem Ladestrom I_{L} speist.

24. Anzeigevorrichtung nach Anspruch 23,
**dadurch gekennzeichnet,**
**dass** die Schaltungsgruppen (21 bis 25) mit dem Energiespeicher (7) permanent verbunden sind und dieser parallel zu der die Schaltungsgruppen versorgenden Strom- oder Spannungsquelle (6) geschaltet ist.

25. Anzeigevorrichtung nach einem der Ansprüche 23 oder 24,
**dadurch gekennzeichnet,**
**dass** der Ladestrom I_{L} so groß gewählt ist, dass nach erfolgtem Laden des Energiespeichers (7) und dem darauf folgenden Ansteigen des Stromes in den mit dem Energiespeichers verbundenen Schaltungsgruppen (21 bis 25) wenigstens ein einer Schaltungsgruppe zugeordneter Reihen-Komparator (31 bis 35) durch Überschreiten des maximalen Stromes I_{Rmax} und/oder der Gesamt-Komparator (4) durch Überschreiten des voreingestellten zusammengesetzten Gesamtstroms N*I_{Rnom} die Strom- oder Spannungsquelle (6) durch Liefern eines vom Normalwert verschiedenen Ergebniswerts E_{G}, E_{R} vermittels der Ergebnisüberwachungseinrichtung (5) abschaltet.

26. Anzeigevorrichtung nach einem der Ansprüche 22 bis 25,
**dadurch gekennzeichnet,**
**dass** die einer Schaltungsgruppe (21 bis 25) zugeordneten Reihen-Komparatoren (31 bis 35) so eingestellt sind, dass diese bei Überschreiten des maximalen Stromes I_{Rmax} in einer Schaltungsgruppe die Strom- oder Spannungsquelle (6) durch Liefern eines vom Normalwert verschiedenen Ergebniswerts E_{R} vermittels der Ergebnisüberwachungseinrichtung (5) eingeschaltet halten.

27. Anzeigevorrichtung nach einem der Ansprüche 15 bis 26,
**dadurch gekennzeichnet,**
**dass** ein träge ansprechendes Sicherungselement (8) vorgesehen ist, dass alle Schaltungsgruppen (21 bis 25) und/oder die Spannungs- oder Stromquelle (6) von der eben dieser versorgenden Stromversorgung (9) trennt, falls ein maximal zulässiger Stromwert I_{Smax} durch die Spannungs- oder Stromquelle (6) erreicht ist.

28. Anzeigevorrichtung nach einem der Ansprüche 15 bis 27,
**dadurch gekennzeichnet,**
**dass** die Steuerschaltungseinrichtung (3) eine elektronisch abgesicherte Schaltungsgruppen-Stromversorgung (31 bis 35, 4, 5, 6, 7, 8) nach einem der Ansprüche 1 bis 14 ist.

29. Anzeigevorrichtung nach einem der Ansprüche 15 bis 28,
**dadurch gekennzeichnet,**
**dass** sie in einer Anlage zur Verkehrs-Regelung, -Steuerung, oder -Überwachung für Straßenfahrzeuge, insbesondere in einer Verkehrsampel verwendet wird.

30. Anzeigevorrichtung nach Anspruch 29,
**dadurch gekennzeichnet,**
**dass** die Anlage zur Verkehrs-Regelung, -Steuerung, oder -Überwachung eine der Anzeigevorrichtung nachgeschaltete Überwachungseinrichtung (22) aufweist, welche einen Gesamtausfall der Anzeigevorrichtung erfasst.

31. Anzeigevorrichtung nach Anspruch 30,
**dadurch gekennzeichnet,**
**dass** sie ausgangsseitig ein Überwachungssignal für die Überwachungseinrichtung (22) liefert, welches zwei unterschiedliche elektrische Zustände besitzt, wobei der eine Zustand, Betriebszustand, einem ordnungsgemäßen Betrieb der Anzeigevorrichtung (1) und der andere Zustand, Störungszustand, einem Gesamtausfall der Anzeigevorrichtung (1) entspricht.

32. Anzeigevorrichtung nach einem der Ansprüche 15 bis 31,
**dadurch gekennzeichnet,**
**dass** ein die durch Spannungs- und Stromversorgung (9) überwachender Komparator (10) vorgesehen ist, der die von der Spannungs- und Stromversorgung (9) gelieferte Spannung mit einem Mindestwert vergleicht, und bei Überschreiten des Mindestwerts ein Spannungsdetekt-Signal E_{S} liefert.

33. Anzeigevorrichtung nach Anspruch 32,
**dadurch gekennzeichnet,**
**dass** der Komparator (10) einen Oszillator (11) aufweist, der erst bei einer über dem Mindestwert liegenden Spannung zu Schwingen beginnt, und das Schwingungssignal an seinem Ausgang zur Verfügung stellt.

34. Anzeigevorrichtung nach Anspruch 33,
**dadurch gekennzeichnet,**
**dass** der Komparator (10) einen Hochpass (12) aufweist, der das Schwingungssignal des Oszillators (11) filtert und danach zu dem Spannungsdetekt-Signal E_{S} gleichgerichtet.

35. Anzeigevorrichtung nach Anspruch 34,
**dadurch gekennzeichnet,**
**dass** eine Ergebnisaddiereinrichtung (14) vorgesehen ist, die der Ergebnisüberwachungseinrichtung (5) und der Strom- oder Spannungsquelle (6) zwischengeschaltet ist und die Stromoder Spannungsquelle (6) nur/bei Vorliegen des Einschalt-/Ausschalt-Signal E_{E} und des Spannungsdetekt-Signals E_{S} einschaltet.

36. Anzeigevorrichtung nach einem der Ansprüche 15 bis 35,
**dadurch gekennzeichnet,**
**dass** eine Aufnahmeleistungsverminderungseinrichtung (15) vorgesehen ist, die bei vorliegen eines externen Absenkungs-Signals S_{A} eine Verminderung der Leistungsaufnahme der Schaltungsgruppen und damit der ganzen Anzeigevorrichtung durch zeitweiliges Ausschalten der Strom- oder Spannungsquelle (6), unabhängig vom Einschalt-/Ausschalt-Signal E_{E} steuert.

37. Anzeigevorrichtung nach Anspruch 36,
**dadurch gekennzeichnet,**
**dass** die Aufnahmeleistungsverminderungseinrichtung (15) einen Oszillator aufweist, der bei vorliegen des Absenkungs-Signals S_{A} ein Rechtecksignal liefert, welches mit dem Einschalt/Ausschalt-Signal E_{E} derart verknüpft wird, dass die Strom- oder Spannungsquelle (6) nur bei vorliegen eines positiven Pulses des Rechtecksignals und dem Einschalt-/Ausschalt-Signal E_{E} eingeschaltet wird.
